# EUROPÄISCHE PATENTANMELDUNG

(11) **EP 0 684 687 A1**
(43) Veröffentlichungstag der Anmeldung: **29.11.1995**
(21) Anmeldenummer: 95201341.5
(22) Anmeldetag: 23.05.1995
(51) Int. Cl.: H02M 3/337

(54) **Gleichspannungskonverter**

(30) Priorität: 28.05.1994 DE 4418780
(71) Anmelder: Philips Patentverwaltung GmbH, 22335 Hamburg (DE); Philips Electronics N.V., 5621 BA Eindhoven (NL)
(72) Erfinder: Raets, Hubert, D-20097 Hamburg (DE)
(74) Vertreter: von Laue, Hanns-Ulrich, Dipl.-Ing.

(57) **Zusammenfassung**

Für einen Gleichspannungskonverter, in welchem eine diesem eingangsseitig zugeführte Gleichspannung in eine höhere Gleichspannung konvertiert wird, ist für möglichst einfachen Aufbau und volle Betriebsfähigkeit sowohl unter Leerlauf wie auch unter voller Last vorgesehen, daß parallel zu einem der elektronischen Schalter (1, 2) eine Reihenschaltung aus einer Kapazität (3), einer Induktivität (4) und der Primärwicklung (5) eines Transformators (6) geschaltet ist, daß der Sekundärwicklung (7) des Transformators (6) eine Kapazität (8) parallelgeschaltet ist und dieser Parallelschaltung eine Kaskaden-Hochspannungs-Multiplikatorschaltung (9) nachgeschaltet ist, welche ausgangsseitig eine Kapazität (10) lädt, und daß eine Steuerschaltung (11) vorgesehen ist, die die Schaltfrequenz der elektronischen Schalter (12) so steuert, daß über der ausgangsseitigen Kapazität (10) eine Gleichspannung gewünschter Größe abfällt.

## Beschreibung

Die Erfindung betrifft einen Gleichspannungskonverter, in welchem eine diesem eingangsseitig zugeführte Gleichspannung auf zwei hintereinander geschaltete elektronische Schalter, die mit antiparallel geschalteten Dioden versehen sind, geführt ist und in welchem diese Gleichspannung in eine höhere Gleichspannung konvertiert wird.

Aus der Veröffentlichung "Proceedings of the European Space Power Conference held in Madrid", Spain, 2-6 October 1989, ESA SP-294, August 1989, Seiten 471 bis 477 ist ein sogenannter serienresonanter Konverter bekannt, der mit einer Hochspannungskaskade kombiniert ist. Serienresonant heißt dabei, daß in dem Primärkreis ein Schwingkreis vorgesehen ist, dessen Serienresonanz wirksam ist. Ferner ist aus der Veröffentlichung "A Comparison of Half-Bridge Resonant Converter Topologies" IEEE Transactions on Power Electronics, Vol. 3, No. 2, April 1988, Seiten 174 bis 182 ein serienparallelresonanter Konverter mit einer Ausgangsdrossel vor dem Ausgangskondensator bekannt.

Es ist Aufgabe der Erfindung, einen Gleichspannungskonverter zu schaffen, der bei geringen Abmessungen, geringen Kosten und hohem Wirkungsgrad eine stabile Hochspannung, ggf. auch an Leerlauf, liefert.

Diese Aufgabe ist erfindungsgemäß dadurch gelöst, daß parallel zu einem der elektronischen Schalter eine Reihenschaltung aus einer Kapazität, einer Induktivität und der Primärwicklung eines Transformators geschaltet ist, daß der Sekundärwicklung des Transformators eine Kapazität parallelgeschaltet ist und dieser Parallelschaltung eine Kapazität nachgeschaltet ist, welche geladen wird, und daß eine Steuerschaltung vorgesehen ist, die die Schaltfrequenz der elektronischen Schalter so steuert, daß über der ausgangsseitigen Kapazität eine Gleichspannung gewünschter Größe abfällt.

Der Gleichspannungskonverter weist eine Halbbrücke auf, so daß zu einem der geschalteten elektronischen Schalter eine Reihenschaltung aus einer Kapazität, einer Induktivität und der Primärwicklung eines Transformators parallelgeschaltet ist. Der Sekundärwicklung des Transformators ist eine Kapazität parallelgeschaltet. Diese beiden Kapazitäten sowie die primärseitige Induktivität bilden den Serien-Parallel-Schwingkreis. Dabei sind die primärseitigen Elemente Kapazität und Induktivität meist diskret aufgebaut, wohingegen die sekundärseitige Kapazität, wenigstens teilweise durch die Kapazität der Sekundärwicklung des Transformators gebildet sein. Gegebenenfalls kann auch ein Teil dieser Kapazität durch ein diskretes Bauelement verwirklicht sein.

Es ist eine Steuerschaltung vorgesehen, welche die Schaltfrequenz der elektronischen Schalter so steuert, daß die ausgangsseitige Kapazität unabhängig von der Last, die die Schaltung zu versorgen hat, immer auf einen gewünschten Gleichspannungswert aufgeladen wird.

Die beiden eingangsseitig elektronisch gesteuerten Schalter werden durch ein Rechtecksignal mit hoher Frequenz im Gegentakt angesteuert. Der Serien-Parallel-Schwingkreis treibt einen nahezu sinusförmigen Strom durch die Primärwicklung des Transformators. Sekundärseitig wird ein Teil dieses Stromes für das Umladen der sekundärseitigen Kapazität verwendet, der Rest fließt in die Kaskadenschaltung.

Ein Vorteil dieser Schaltung liegt darin, daß der Transformator beidseitig ausgesteuert wird und dadurch seine Abmessungen geringer sein können, als die der Transformatoren nach den Schaltungen im Stande der Technik. Die Ausgangsspannung des Transformators kann auf einem Wert gehalten werden, der es erübrigt, den Transformator zu vergießen. Dies wiederum hat große Vorteile im Wärmehaushalt.

Ein wesentlicher Vorteil der erfindungsgemäßen Schaltung liegt ferner darin, daß die Schaltung in der Lage ist, im Leerlauf zu arbeiten, also ohne nennenswerte externe Last. Hierzu ist der erfindungsgemäße Konverter mit Serien-Parallel-Schwingkreis ohne Ausgangsdrossel besonders gut geeignet.

Der erfindungsgemäße Gleichspannungskonverter bzw. dessen Übertragungsfunktion stellt ein System erster Ordnung dar, welches es gestattet, die Steuerschaltung als PI-Regler zu gestalten und dennoch eine stabile Ausgangsspannung zu erhalten.

Zusammenfassend kann gesagt werden, daß der erfindungsgemäße Gleichspannungskonverter mit einem Wirkungsbereich von Vollast bis Leerlauf mit stabiler Ausgangsspannung arbeiten kann, geringe Abmessungen aufweist und bei geringem Aufwand und damit geringen Kosten mit hohem Wirkungsgrad arbeitet.

Für eine Ausgestaltung der Erfindung ist vorgesehen, daß der Parallelschaltung aus der Sekundärwicklung des Transformators und der Kapazität eine Kaskaden-Hochspannungs-Multiplikatorschaltung nachgeschaltet ist.

Die Hochspannungskaskade multipliziert die Sekundärspannung hoch und lädt ausgangsseitig die Kapazität, und es wird damit eine höhere sekundärseitige Gleichspannung erzielt, so daß der erfindungsgemäße Gleichspannungskonverter quasi als Hochspannungsgenerator eingesetzt werden kann. Die Hochspannungskaskade weist eingangsseitig eine Kapazität auf, die teilweise durch die der Sekundärwicklung des Transformators parallelgeschaltete Kapazität repräsentiert sein kann. Durch die Kombination von Transformator und Hochspannungskaskade zur Spannungsmultiplikation ist es möglich, die Spannungsanforderungen an den Transformator deutlich zu reduzieren.

Für eine weitere Ausgestaltung der Erfindung ist vorgesehen, daß die Schaltung mit einer Frequenz oberhalb der Resonanzfrequenz des durch die primärseitigen Kapazität, die primärseitige Induktivität und die zur Primärseite transformierte sekundärseitige Kapazität und der ihr parallelgeschalteten Last betrieben wird.

Durch einen Betrieb oberhalb der Resonanzfrequenz des Serien-Parallel-Schwingkreises gibt es keine Einschaltverluste der elektronischen Schalter und der ihnen parallelgeschalteten Dioden. Die Ausschaltverluste können gegebenenfalls durch parallel zu dem Schalter angeordneten Kondensatoren weiter reduziert werden. Im Ergebnis verursachen die Schalter praktisch nur rein ohmsche Schalterverluste.

Infolge der oben beschriebenen Eigenschaften, insbesondere des guten Wirkungsgrades und der Fähigkeit der Schaltung im gesamten Aussteuerungsbereich zwischen Leerlauf und Vollast immer die gewünschte Spannung bereitstellen zu können, eignet sich diese, wie nach einer weiteren Ausgestaltung der Erfindung vorgesehen ist, zur Ansteuerung einer Bildwiedergaberöhre.

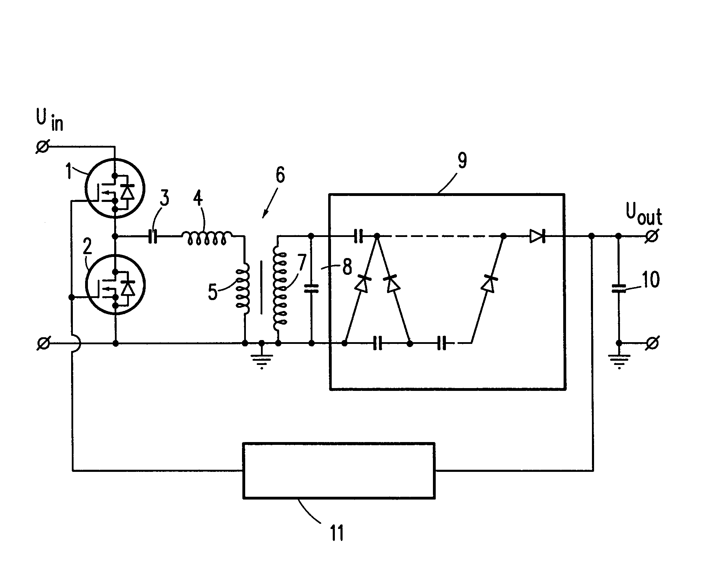

Nachfolgend wird anhand der Zeichnung ein Ausführungsbeispiel der Erfindung näher erläutert.

Die einzige Figur der Zeichnung zeigt einen erfindungsgemäßen Gleichspannungskonverter, der eingangsseitig einen ersten elektronischen Schalter 1 sowie einen zweiten elektronischen Schalter 2 aufweist, bei denen es sich um MOSFET-Transistoren handelt, die mit Antiparalleldioden versehen sind. Die beiden MOSFET-Schalter sind in Reihe geschaltet und mit einer Eingangsspannung Uᵢₙ beaufschlagt, bei der es sich um eine Gleichspannung handelt. Der Gleichspannungskonverter dient dazu, diese Gleichspannung auf eine höhere Gleichspannung U_{oUt} zu konvertieren.

Der Gleichspannungskonverter ist eingangsseitig in Form einer Halbbrücke aufgebaut, d.h. parallel zu einem der beiden Schalter, in der Darsteilung gemäß der Figur parallel zu dem Schalter 2, ist eine Serienschaltung aus einer ersten Kapazität 3, einer Induktivität 4 und der Primärwicklung 5 eines Transformators 6 vorgesehen.

Der Transformator 6 ist so ausgelegt, daß eine sekundärseitige Wicklung 7 eine höhere Ausgangsspannung liefert. Parallel zu der Sekundärwicklung 7 ist eine zweite Kapazität 8 vorgesehen.

Die Kapazität 3, die Induktivität 4 und die Kapazität 8 bilden einen Serien-Parallel-Schwingkreis.

Der Parallelschaltung aus der Sekundärwicklung 7 des Transformators 6 und der Kapazität 8 ist eine Hochspannungs-Kaskadenschaltung 9 nachgeschaltet, welche in an sich bekannter Weise aufgebaut ist und welche ausgangsseitig eine Gleichspannung mit hohem Spannungswert liefert, welche eine dritte Kapazität 10 auflädt. Über der Kapazität 10 und dem Bezugspotential fällt eine Spannung U_{oUt} ab, bei der es sich um die hochtransformierte Gleichspannung handelt.

Es ist ferner eine Steuerschaltung 11 vorgesehen, welche die Spannung über der Kapazität 10 abgreift und die elektronischen Schalter 1 und 2 so steuert, daß die über der Kapazität 10 abfallende Spannung immer den gewünschten Wert aufweist.

Die Kapazität 3 sowie die Induktivität 4 sind meist als diskrete Bauelemente aufgebaut, während die Kapazität 8 meist durch die Eingangskapazität der Hochspannungskaskade 9 und die Kapazität der Sekundärwicklung des Transformators gebildet wird. Reicht deren Kapazität nicht aus, um die gewünschten Resonanzfrequenzen zu erhalten, kann natürlich ein Teil der Kapazität 8 auch durch ein diskretes Bauelement verwirklicht sein.

Die Kapazität 3 und die Induktivität 4 sowie der über den Transformator zur Primärseite transformierte Kapazitätswert der Kapazität 8 bilden einen Serien-Parallel-Schwingkreis, welcher eine Resonanzfrequenz aufweist. Diese Resonanzfrequenz ändert sich mit der Belastung der Schaltung. Die Schaltung wird vorteilhaft mit einer Arbeitsfrequenz betrieben, welche oberhalb der Resonanzfrequenz des Serien-Parallel-Schwingkreises liegt.

Ist dies der Fall, so bedeutet eine höhere Taktfrequenz der elektronischen Schalter 1 und 2 grundsätzlich eine geringere und eine sich der Resonanzfrequenz nähernde, niedrigere Schaltfrequenz der elektronischen Schalter 1 und 2 eine höhere Ausgangsspannung. Diese Eigenschaft kann dazu benutzt werden, den Spannungswert der Kapazität 10 auf einem gewünschten Wert zu halten. Dazu ist die Steuerschaltung 11 vorgesehen, welche den über der Kapazität 10 abfallenden Spannungswert abtastet und die elektronischen Schalter 1 und 2 so steuert, daß der gewünschte Spannungswert jederzeit erhalten bleibt. Fällt der Spannungswert der Kapazität tendenziell unter den gewünschten Wert ab, so wird die Schaltfrequenz der elektronischen Schalter 1 und 2 abgesenkt. Im umgekehrten Falle wird diese Schaltfrequenz heraufgesetzt. Damit ist es möglich, die Schaltung sowohl unter voller Last wie auch im Leerlauf zu betreiben, wobei die Ausgangsspannung also die Spannung über der Kapazität 10, die wenigstens teilweise auch durch eine externe Last gebildet sein kann, jederzeit konstant bleibt. Dies macht die erfindungsgemäße Schaltung insbesondere zur Ansteuerung einer Bildwiedergaberöhre geeignet, bei der unabhängig von der Last, also vom Bildinhalt, jederzeit eine konstante Gleichspannung zur Verfügung gestellt werden sollte.

Der erfindungsgemäße Gleichspannungskonverter ist relativ einfach aufgebaut, und damit kostengünstig. Der Transformator wird bezüglich seines magnetischen Materials zu beiden Polaritäten hin voll ausgesteuert, so daß er relativ klein ausgelegt sein kann.

## Patentansprüche

1. Gleichspannungskonverter, in welchem eine diesem eingangsseitig zugeführte Gleichspannung auf zwei hintereinander geschaltete elektronische Schalter (1, 2), die mit antiparallel geschalteten Dioden versehen sind, geführt ist und in welchem diese Gleichspannung in eine höhere Gleichspannung konvertiert wird, dadurch gekennzeichnet, daß parallel zu einem der elektronischen Schalter (1, 2) eine Reihenschaltung aus einer Kapazität (3), einer Induktivität (4) und der Primärwicklung (5) eines Transformators (6) geschaltet ist, daß der Sekundärwicklung (7) des Transformators (6) eine Kapazität (8) parallelgeschaltet ist und dieser Parallelschaltung eine Kapazität (10) nachgeschaltet ist, welche geladen wird, und daß eine Steuerschaltung (11) vorgesehen ist, die die Schaltfrequenz der elektronischen Schalter (12) so steuert, daß über der ausgangsseitigen Kapazität (10) eine Gleichspannung gewünschter Größe abfällt.

2. Gleichspannungskonverter nach Anspruch 1, dadurch gekennzeichnet, daß der Parallelschaltung aus der Sekundärwicklung (7) des Transformators (6) und der Kapazität (8) eine Kaskaden-Hochspannungs-Multiplikatorschaltung (9) nachgeschaltet ist.

3. Gleichspannungskonverter nach Anspruch 1 oder 2,
dadurch gekennzeichnet, daß die Schaltung mit einer Frequenz oberhalb der Resonanzfrequenz des durch die primärseitigen Kapazität (3), die primärseitige Induktivität (4) und die zur Primärseite transformierte sekundär seitige Kapazität (8) und der ihr parallelgeschalteten Last betrieben wird.

4. Verwendung des Gleichspannungskonverters nach einem der Ansprüche 1 bis 3 zur Ansteuerung einer Bildwiedergaberöhre.
